# EUROPÄISCHE PATENTSCHRIFT

(11) **EP 3 950 419 B1**
(45) Veröffentlichungstag und Bekanntmachung des Hinweises auf die Patenterteilung: **14.02.2024**
(21) Anmeldenummer: 21186423.6
(22) Anmeldetag: 19.07.2021
(51) Int. Cl.: B60N 2/20, B60N 2/22, B60N 2/30, B60N 3/00

(54) **FAHRZEUGSITZ**
VEHICLE SEAT
SIÈGE DE VÉHICULE

(30) Priorität: 07.08.2020 DE 102020120853
(43) Veröffentlichungstag der Anmeldung: 09.02.2022
(73) Patentinhaber: MAN Truck & Bus SE, 80995 München (DE)
(72) Erfinder: Schweitzer, Simon Martin Christian, 81245 München (DE); Schropp, Sven, 86316 Friedberg (DE); Gundelsheimer, Wolfram, 85757 Karlsfeld (DE)
(74) Vertreter: v. Bezold & Partner Patentanwälte - PartG mbB

(56) Entgegenhaltungen:
- CN-U- 202 439 580
- DE-T5-112011 105 252
- FR-A1- 2 879 535
- GB-A- 2 395 118

## Beschreibung

Die Erfindung betrifft einen Fahrzeugsitz, insbesondere einen Kraftfahrzeugsitz, besonders bevorzugt einen Sitz und/oder Beifahrersitz im Führerhaus eines Nutzfahrzeuges, sowie ein Fahrzeug mit einem solchen Fahrzeugsitz.

Dokument GB 2 395 118 A offenbart eine Fahrzeugsitzanordnung, aufweisend eine geteilte Rückenlehne mit einem oberen Rückenlehnenabschnitt, der von einer normalen Sitzposition nach vorne in eine Gebrauchsposition klappbar ist. Ein Tischablagegehäuse, das an einer hinteren Fläche des oberen Rückenlehnenabschnitts befestigt ist, bildet eine Tischfläche und nimmt zwei ausziehbare Tische auf, die herausgezogen werden können, um zwei weitere Tischflächen bereitzustellen. Ein klappbares Sitzpolster ist an der Vorderseite einer Sitzbasis angeordnet und kann um 90° gedreht werden, um den oberen Rückenlehnenabschnitt durch die Kopfstütze zu stützen.

Im Allgemeinen sind in einem Kraftfahrzeug mehrere Fahrzeugsitze verbaut, wobei im normalen Betrieb oft nicht alle Fahrzeugsitze besetzt und daher notwendig sind. Insbesondere in einem Nutzfahrzeug ergibt sich oft die Situation, dass sich nur der Fahrer im Fahrerhaus des Nutzfahrzeugs befindet und der Beifahrersitz unbenutzt ist. Es wäre wünschenswert, den Fahrzeugsitz, z.B. den Beifahrersitz, und/oder den Raum, der von dem Fahrzeugsitz eingenommen wird, für andere Zwecke zu verwenden und so den Innenraum des Fahrerhauses effizienter zu nutzen.

Daher besteht Bedarf für einen alternativen und/oder verbesserten Fahrzeugsitz, der für verschiedene Anwendungssituationen konfigurierbar ist, wenn dieser nicht als Sitzplatz notwendig ist.

Der Erfindung liegt somit die Aufgabe zu Grunde, einen alternativen und/oder verbesserten Fahrzeugsitz, der für verschiedene Anwendungssituationen konfigurierbar ist, bereitzustellen.

Die Aufgabe wird gelöst durch die Merkmale des unabhängigen Anspruchs 1. Vorteilhafte Weiterbildungen sind in den abhängigen Ansprüchen und der Beschreibung angegeben. Gemäß einem allgemeinen Aspekt der Erfindung wird ein Fahrzeugsitz, vorzugsweise ein Kraftfahrzeugsitz, bereitgestellt. Der Fahrzeugsitz umfasst ein Sitzteil und eine Rückenlehne. Das Sitzteil ist um eine horizontale erste Schwenkachse zwischen einer horizontalen Normalstellung und einer nicht-horizontalen, vorzugsweise vertikalen, Klappstellung verschwenkbar. Die Rückenlehne umfasst eine untere Teilrückenlehne und eine um eine horizontale zweite Schwenkachse schwenkbar an der unteren Teilrückenlehne angebrachte obere Teilrückenlehne. Die obere Teilrückenlehne ist um die zweite Schwenkachse in Richtung des Sitzteils in eine horizontale Klappstellung verschwenkbar.

Vorteilhaft kann der Fahrzeugsitz kompakt zusammengeklappt werden, wobei das durch den Fahrzeugsitz eingenommene Raumvolumen durch das Zusammenklappen in bis zu zwei Richtungen verkleinert werden kann. Das Raumvolumen bezieht sich auf den Platzbedarf des Fahrzeugsitzes und insbesondere seine Ausdehnung in Längsrichtung und/oder in Hochrichtung des Fahrzeugs im eingebauten Zustand des Fahrzeugsitzes. Das Raumvolumen kann zum einen in Längsrichtung durch das Verschwenken des Sitzteils in die nicht-horizontale, vorzugsweise vertikale, Klappstellung, zum anderen in Hochrichtung durch das Verschwenken der oberen Teilrückenlehne verkleinert werden.

Der durch den zusammengeklappten Fahrzeugsitz freigegebene Raum kann vorteilhaft anderweitig verwendet werden, z. B. als zusätzlicher Stauraum, Aufenthalts- und/oder Bewegungsraum. Ferner bietet der zusätzliche Freiraum, insbesondere durch das Verschwenken des Sitzteils, einen verbesserten Einstieg in das Fahrerhaus und eine größere Bewegungsfreiheit innerhalb des Fahrerhauses, bei Verwendung des Fahrzeugsitzes in einem Fahrerhaus eines Nutzfahrzeugs.

Die obere Teilrückenlehne kann ein vom Sitzteil abgewandter Abschnitt der Rückenlehne sein.

Die horizontale zweite Schwenkachse kann eine Rückenlehnenquerachse oder parallel zur Rückenlehnenquerachse sein. Die horizontale erste Schwenkachse kann parallel zur Rückenlehnenquerachse sein. Die horizontale erste Schwenkachse kann vorzugsweise parallel zur horizontalen zweiten Schwenkachse sein.

In einem eingebauten Zustand des Fahrzeugsitzes in einem Fahrzeug verlaufen die horizontale erste Schwenkachse und die horizontale zweite Schwenkachse vorzugsweise in Querrichtung des Fahrzeugs. Die horizontale erste Schwenkachse und die horizontale zweite Schwenkachse verlaufen vorzugsweise quer zu einer Blickrichtung eines Fahrers bzw. Beifahrers in einer normalen Sitzposition auf dem Fahrzeugsitz.

Die Ausrichtungen der horizontalen Normalstellung und der nicht-horizontalen Klappstellung des Sitzteils beziehen sich z. B. auf eine Sitzfläche des Sitzteils. In der horizontalen Normalstellung ist die Sitzfläche horizontal ausgerichtet, auf der der Fahrer bzw. Mitfahrer die normale Sitzposition einnehmen kann. In der vertikalen Klappstellung ist die Sitzfläche vertikal ausgerichtet.

Die Ausrichtung der horizontalen Klappstellung der oberen Teilrückenlehne bezieht sich z. B. auf eine Vorderseite oder Rückseite der oberen Teilrückenlehne. In einer Normalstellung des oberen Teilrückenlehne ist diese in etwa vertikal ausgerichtet bzw. weist eine Neigung relativ zum Sitzteil auf, sodass sich der Fahrer bzw. Mitfahrer in der normalen und aufrechten Sitzposition mit seinem Rücken auf der Vorderseite der oberen Teilrückenlehne anlehnen kann. In der horizontalen Klappstellung ist die Vorderseite und Rückseite der oberen Teilrückenlehne horizontal ausgerichtet.

Gemäß einer besonders bevorzugten Ausführungsform können die horizontalen ersten und zweiten Schwenkachsen derart angeordnet sein, dass die obere Teilrückenlehne in die horizontale Klappstellung verschwenkbar ist, wenn das Sitzteil bereits in dessen Klappstellung verschwenkt ist. Alternativ oder ergänzend können die horizontalen ersten und zweiten Schwenkachsen derart angeordnet sein, dass das Sitzteil in dessen Klappstellung verschwenkbar ist, wenn die obere Rückenlehne bereits in die horizontale Klappstellung verschwenkt ist.

Vorteilhaft können das Sitzteil und die obere Teilrückenlehne gleichzeitig verschwenkt werden, um das durch den Fahrzeugsitz eingenommene Raumvolumen in zwei Richtungen gleichzeitig zu verkleinern und damit die Kompaktheit des zusammenklappten Fahrzeugsitzes zu optimieren.

Gemäß einer weiteren Ausführungsform kann, wenn sich die obere Teilrückenlehne in der horizontalen Klappstellung und das Sitzteil in dessen Klappstellung befinden, die obere Teilrückenlehne das Sitzteil überragen. Vorteilhaft kann eine kompakte, quaderähnliche Form des zusammengeklappten Fahrzeugsitzes erzielt werden und so die Verkleinerung des durch den Fahrzeugsitz eingenommenen Raumvolumens optimiert werden.

Ferner kann, wenn sich die obere Teilrückenlehne in der horizontalen Klappstellung und das Sitzteil in dessen Klappstellung befinden, die obere Teilrückenlehne auf dem Sitzteil aufliegen. Hierbei dient vorteilhafterweise das Sitzteil als Stütze für die obere Teilrückenlehne, was besonders vorteilhaft ist, wenn diese in der horizontalen Klappstellung z. B. als Tisch oder Ablage genutzt wird. Anders ausgedrückt können die horizontale erste Schwenkachse und die horizontale zweite Schwenkachse so positioniert und/oder die Längen des Sitzteils und der Teilrückenlehnen zweckmäßig so dimensioniert sein, dass die obere Teilrückenlehne in der horizontalen Klappstellung auf dem Sitzteil in dessen Klappstellung aufliegt.

Erfindungsgemäß umfasst der Fahrzeugsitz ferner einen Unterbau, auf dem das Sitzteil mittels einer Schwenkverbindung um die horizontale erste Schwenkachse schwenkbar gehaltert ist. Der Unterbau bildet hierbei einen zum Sitzteil hin offenen Hohlraum aus. Die Schwenkverbindung ist beabstandet zu einem Endbereich des Sitzteils, der der unteren Teilrückenlehne in der horizontalen Normalstellung zugewandt ist bzw. benachbart zu dieser angeordnet ist, angeordnet, so dass beim Verschwenken des Sitzteils von der horizontalen Normalstellung in dessen Klappstellung dieser Endbereich in den Hohlraum des Unterbaus eintaucht. Dadurch kann der Platzbedarf in Fahrzeughochrichtung für das Sitzteil in dessen Klappstellung reduziert werden.

Vorteilhaft kann die Position der Schwenkverbindung so gewählt sein, dass die Größe des Endbereichs, der in den Unterbau eintauchen kann, möglichst groß, z. B. maximiert ist und/oder in der Klappstellung des Sitzteils ein Abstand zwischen dem Sitzteil und einer unteren Innenseite des Unterbaus möglichst klein, z. B. minimiert ist, vorzugsweise wobei das Sitzteil beim Verschwenken nicht an der unteren Innenseite des Unterbaus anstößt.

Der Unterbau kann eine zum Sitzteil hin offene Kastenform aufweisen.

Die Schwenkverbindung kann - in Längsrichtung des Fahrzeugs gesehen - an einem mittleren Bereich des Unterbaus angeordnet sein.

Gemäß einer weiteren Variante kann eine Breite des Sitzteils in dem Endbereich, der in der horizontalen Normalstellung zwischen der ersten Schwenkachse und der unteren Teilrückenlehne liegt, kleiner sein als eine Breite des Sitzteils in einem Vorderbereich. Die Breite des Vorderbereichs kann größer und die Breite des Endbereichs kann kleiner als eine Breite des Hohlraums des Unterbaus sein.

Vorteilhaft kann der Vorderbereich des Sitzteils in der horizontalen Normalstellung auf dem Unterbau aufliegen und damit eine entsprechende Stabilität der Sitzfläche erzielen, insbesondere wenn der Fahrer bzw. Mitfahrer auf dem Fahrzeugsitz sitzt. Gleichzeitig ermöglicht der Endbereich das Eintauchen in den Hohlraum und damit das kompakte Zusammenklappen des Fahrzeugsitzes.

Gemäß einer weiteren Ausführungsvariante kann der Fahrzeugsitz ferner eine Arretiervorrichtung zur lösbaren Arretierung des Sitzteils in der Klappstellung umfassen. Vorteilhaft kann eine Stabilität des zusammengeklappten Fahrzeugsitzes erzielt und ein unbeabsichtigtes Zurückschwenken des Sitzteils in die horizontale Normalstellung verhindert werden.

Die Arretiervorrichtung kann als Klemmvorrichtung ausgeführt sein, aufweisend eine im Unterbau angeordnete Aufnahme oder Klemme zur Aufnahme eines oder einer an der Unterseite des Sitzteils angeordneten Klemmteils oder Aufnahme bzw. Aufnahmeteils.

Zur Ausbildung der Arretiervorrichtung im Unterbau kann eine Klemme und/oder Aufnahme so im Unterbau positioniert sein, dass beim Verschwenken des Sitzteils von der horizontalen Normalstellung in dessen Klappstellung der in den Hohlraum eintauchende Endbereich des Sitzteils an der Klemme und/oder Aufnahme arretiert wird, vorzugsweise in dem ein Rohrabschnitt eines Traggestells des Sitzteils an der Klemme und/oder Aufnahme arretiert werden kann. Der Rohrabschnitt bzw. das Traggestell des Sitzteils kann in dieser Variante somit gleichzeitig zur Ausbildung der Arretiervorrichtung genutzt werden.

Gemäß einer weiteren Ausführungsform kann die obere Teilrückenlehne auf ihrer Rückseite eine Tischfläche ausbilden. Alternativ oder ergänzend kann auf der Rückseite der oberen Teilrückenlehne eine Abdeckung zur Ausbildung einer Tischfläche angeordnet sein.

Vorteilhaft ist der erfindungsmäßige Fahrzeugsitz zusätzlich als Tisch konfigurierbar, der z. B. von den Passagieren bzw. Fahrer während Fahrpausen verwendet werden kann. Diese Konfigurierbarkeit ist insbesondere für Nutzfahrzeuge von Vorteil. So ist es bei Nutzfahrzeugen üblich, das Fahrerhaus während Fahrpausen und Ruhepausen als Wohn- und Schlafraum zu nutzen. Durch den erfindungsgemäßen Fahrzeugsitz kann der Raum innerhalb des Fahrerhauses effizienter als Wohnraum genutzt werden, da keine zusätzliche Installation eines Tisches notwendig ist, sondern der ohnehin nicht genutzte Fahrzeugsitz, insbesondere ein Beifahrersitz, entsprechend als Tisch genutzt werden kann.

Gemäß einer weiteren Variante kann die obere Teilrückenlehne eine Kopfstütze umfassen oder an einem oberen Ende der oberen Teilrückenlehne die Kopfstütze angebracht oder anbringbar sein.

Gemäß einer weiteren Ausführungsform kann der Fahrzeugsitz unterseitig entlang einer Schienenanordnung horizontal verschiebbar angeordnet oder anordbar sein. Vorzugsweise kann der Fahrzeugsitz entlang der Schienenanordnung in Längsrichtung der Schienenanordnung verschoben werden. Im eingebauten Zustand des Fahrzeugsitzes kann die Längsrichtung der Schienenanordnung die Längsrichtung des Fahrzeugs sein. Die Schienenanordnung kann mindestens eine Bodenschiene und eine gegenüber dieser Bodenschiene in Längsrichtung verschiebbare Sitzschiene umfassen.

Alternativ oder ergänzend kann der Fahrzeugsitz unterseitig auf einer Dreheinrichtung, vorzugsweise einer drehtellerartigen Dreheinrichtung, gelagert sein, mittels derer der Fahrzeugsitz um eine vertikale Drehachse verschwenkbar sein kann.

Umfasst der Fahrzeugsitz die Schienenanordnung und die Dreheinrichtung, so kann der Fahrzeugsitz, vorzugsweise gleichzeitig, in Längsrichtung und um die vertikale Drehachse verschwenkbar sein.

Gemäß einer weiteren Variante kann die untere Teilrückenlehne neigungsverstellbar an dem Unterbau gehaltert sein, vorzugsweise mittels eines unteren Beschlagsystems am Unterbau gehaltert sein.

Die obere Teilrückenlehne kann mittels eines oberen Beschlagsystem verschwenkbar an der unteren Teilrückenlehne angebracht sein.

Das obere und untere Beschlagsystem können durch aus dem Stand der Technik bekannte Beschlagsysteme ausgebildet sein. Das obere Beschlagsystem kann beispielsweise zwei Beschläge aufweisen, die entlang der horizontalen zweiten Schwenkachse auf zwei gegenüberliegenden Seiten der oberen Teilrückenlehne angeordnet sind. Das untere Beschlagsystem kann beispielsweise zwei Beschläge aufweisen, die entlang einer parallel zur horizontalen zweiten Schwenkachse ausgebildeten Schwenkachse auf zwei gegenüberliegenden Seiten der unteren Teilrückenlehne angeordnet sind.

Gemäß einer weiteren Variante kann das untere Beschlagsystem und das obere Beschlagsystem jeweils einen Anschlag aufweisen, der jeweils eine maximale Verschwenkstellung festlegt. Die Anschläge können jeweils so festgelegt sein, dass sich bei maximaler Verschwenkstellung der unteren Teilrückenlehne und der oberen Teilrückenlehne die obere Teilrückenlehne in der horizontalen Klappstellung befindet.

Gemäß einer weiteren Ausführungsform kann das Sitzteil einen Sitzpolsterträger und ein auf dem Sitzpolsterträger angeordnetes Sitzpolster umfassen. Alternativ oder ergänzend kann die obere Teilrückenlehne einen oberen Rückenpolsterträger und ein auf dem oberen Rückenpolsterträger angeordnetes oberes Rückenpolster umfassen. Alternativ oder ergänzend kann die untere Teilrückenlehne einen unteren Rückenpolsterträger und ein auf dem unteren Rückenpolsterträger angeordnetes unteres Rückenpolster umfassen.

Gemäß einer weiteren Ausführungsform kann der Fahrzeugsitz ein Beifahrersitz für ein Fahrerhaus eines Nutzfahrzeugs sein.

Gemäß einem weiteren allgemeinen Aspekt der Erfindung wird ein Fahrzeug, vorzugsweise ein Nutzfahrzeug, mit einem Fahrzeugsitz wie hierin offenbart bereitgestellt. Ein Nutzfahrzeug ist ein Fahrzeug, das durch seine Bauart und Einrichtung zur Beförderung von Personen, zum Transport von Gütern oder zum Ziehen von Anhängerfahrzeugen ausgelegt ist. So kann das Fahrzeug z. B. ein Lastkraftwagen, ein Sattelzug und/oder ein Omnibus sein.

Die zuvor beschriebenen Ausführungsformen, Varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Seitenansicht eines Fahrzeugsitzes gemäß einer Ausführungsform der Erfindung in einer Sitzkonfiguration;
- Figur 2: eine schematische Seitenansicht des Fahrzeugsitzes in einer Konfiguration mit oberer Teilrückenlehne in horizontaler Klappstellung;
- Figur 3: eine schematische Seitenansicht des Fahrzeugsitzes in einer Konfiguration mit oberer Teilrückenlehne in horizontaler Klappstellung und Sitzteil in vertikaler Klappstellung; und
- Figur 4: eine schematische Schrägansicht des Fahrzeugsitzes in einer Konfiguration gemäß Figur 3.

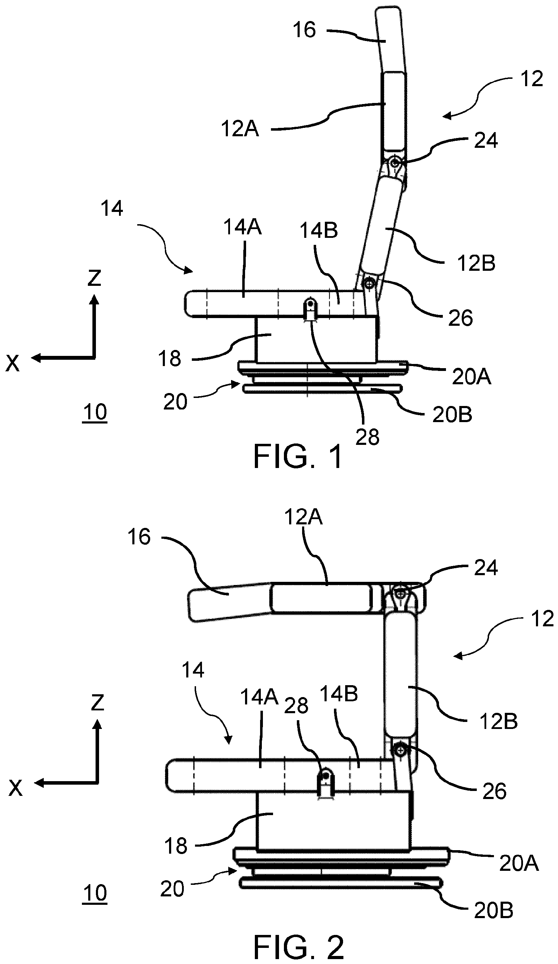

Die Figuren 1-4 zeigen den Fahrzeugsitz 10 gemäß einer Ausführungsform der Erfindung in verschiedenen Konfigurationen.

Die in den Figuren angegebenen Richtungen beziehen sich auf bevorzugte Fahrzeugrichtungen, wenn sich der Fahrzeugsitz 10 im eingebauten Zustand befindet, nämlich die Fahrzeuglängsrichtung (X-Richtung), die Fahrzeugquerrichtung (Y-Richtung) und die Fahrzeughochrichtung (Z-Richtung).

Der Fahrzeugsitz 10 umfasst ein Sitzteil 14 und eine Rückenlehne 12.

Die Rückenlehne 12 zeichnet sich dadurch aus, dass sie zwei Teilrückenlehnen umfasst: eine untere Teilrückenlehne 12B und eine um eine horizontale zweite Schwenkachse S2 schwenkbar an der unteren Teilrückenlehne 12B angebrachte obere Teilrückenlehne 12A. Die obere Teilrückenlehne 12A ist aus einer - in Figur 1 gezeigten - normalen Sitzstellung, in der die obere Teilrückenlehne 12A in etwa vertikal ausgerichtet ist, um die zweite Schwenkachse S2 in Richtung des Sitzteils 14 in eine - in Figur 2 gezeigte - horizontale Klappstellung verschwenkbar. Ferner kann die obere Teilrückenlehne 12A eine Kopfstütze 16 umfassen oder an einem oberen Ende der oberen Teilrückenlehne 12A die Kopfstütze 16 angebracht oder anbringbar sein.

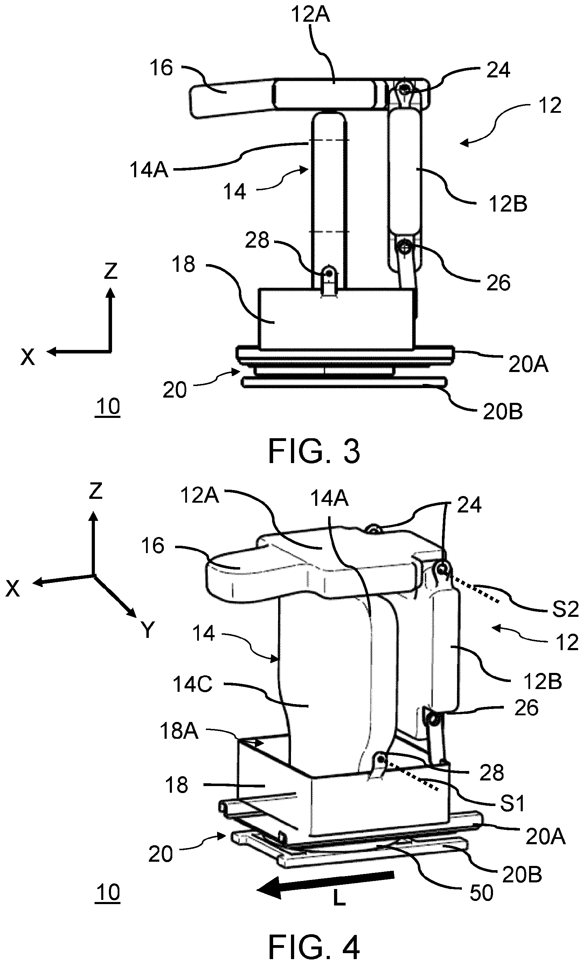

Das Sitzteil 14 ist um eine horizontale erste Schwenkachse S1 zwischen einer - in Figur 1 gezeigten - horizontalen Normalstellung und einer nicht-horizontalen Klappstellung verschwenkbar ist. Wie in Figur 3 gezeigt, kann die nicht-horizontale Klappstellung einer vertikalen Klappstellung entsprechen.

Die horizontale erste Schwenkachse S1 und die horizontale zweite Schwenkachse S2 sind in Y-Richtung ausgerichtet.

Wie in den Figuren 3 und 4 gezeigt, können das Sitzteil 14 und die obere Teilrückenlehne 12A gleichzeitig in ihre jeweilige Klappstellung verschwenkt sein. Entsprechend können die horizontalen ersten und zweiten Schwenkachsen S1, S2 derart angeordnet und das Sitzteil und die Teilrückenlehnen größenmäßig so dimensioniert sein, dass die obere Teilrückenlehne 12A in die horizontale Klappstellung verschwenkbar ist, wenn das Sitzteil 14 bereits in dessen Klappstellung verschwenkt ist, und/oder das Sitzteil 14 in dessen Klappstellung verschwenkbar ist, wenn die obere Rückenlehne 12A bereits in die horizontale Klappstellung verschwenkt ist.

Sind sowohl die obere Teilrückenlehne 12A als auch das Sitzteil 14 verschwenkt, so überragt in diesem Ausführungsbeispiel die obere Teilrückenlehne 12A das Sitzteil 14 und liegt auf dem Sitzteil auf.

Erfindungsgemäß umfasst der Fahrzeugsitz 10 ferner einen Unterbau 18, auf dem das Sitzteil 14 mittels einer Schwenkverbindung 28 um die horizontale erste Schwenkachse S1 schwenkbar gehaltert ist und der einen zum Sitzteil 14 hin offenen Hohlraum 18A ausbildet. Wie zu erkennen ist, ist die Schwenkverbindung 28 beabstandet zu einem Endbereich 14B des Sitzteils 14, der der Rückenlehne 12 in der horizontalen Normalstellung zugewandt ist, angeordnet. Entsprechend kann dieser Endbereich 14B beim Verschwenken des Sitzteils 14 von der horizontalen Normalstellung in dessen Klappstellung in den Hohlraum 18A des Unterbaus 18 eintauchen.

Um dieses Eintauchen des Endbereich 14B in den Hohlraum 18A des Unterbaus 18 zu gewährleisten, kann der Unterbau 18 eine zum Sitzteil 14 hin offene Kastenform aufweisen.

Ferner kann eine Breite des Sitzteils 14 in dem Endbereich 14B, der in der horizontalen Normalstellung zwischen der ersten Schwenkachse S1 und der Rückenlehne 12 liegt, kleiner sein als eine Breite des Sitzteils 14 in einem Vorderbereich 14A, wobei vorzugsweise die Breite des Vorderbereichs 14A größer und die Breite des Endbereichs 14B kleiner als eine Breite des Hohlraums 18A des Unterbaus 18 ist. Die jeweiligen Breiten beziehen sich hierbei auf die jeweiligen Maße in Y-Richtung.

Das Sitzteil 14 kann mittels einer Arretiervorrichtung (nicht gezeigt) lösbar in der Klappstellung arretiert werden. Die Arretiervorrichtung kann z. B. als Klemmvorrichtung ausgeführt sein, aufweisend eine im Unterbau 18 angeordnete Aufnahme oder Klemme zur Aufnahme eines oder einer an der Unterseite 14C des Sitzteils 14 angeordneten Klemmteils oder Aufnahme. Dazu kann die Klemme und/oder Aufnahme im Unterbau 18 so positioniert ist, dass beim Verschwenken des Sitzteils 14 von der horizontalen Normalstellung in dessen Klappstellung der in den Hohlraum 18A eintauchende Endbereich 14B des Sitzteils 14 an der Klemme und/oder Aufnahme arretiert wird, vorzugsweise in dem ein Rohrabschnitt eines Traggestells des Sitzteils 14 an der Klemme und/oder Aufnahme arretiert wird.

Der Fahrzeugsitz 10 kann ferner unterseitig entlang einer Schienenanordnung 20 horizontal verschiebbar angeordnet oder anordbar sein. Die Schienenanordnung 20 umfasst mindestens eine Bodenschiene 20B und eine gegenüber dieser Bodenschiene 20B in einer Längsverstellrichtung L verschiebbare Sitzschiene 20A, wobei die Bodenschiene 20B mit der Sitzschiene 20A mittels einer lösbaren Verriegelungseinrichtung lösbar verriegelt werden können. Die in Figur 4 angegebene Längsverstellrichtung L entspricht der X-Richtung.

Der Fahrzeugsitz 10 kann ferner ein unteres Beschlagsystem 26 aufweisen, mit dem die Rückenlehne 12 neigungsverstellbar am Unterbau 18 gehaltert sein kann, und/oder unterseitig auf einer Dreheinrichtung, vorzugsweise einer drehtellerartigen Dreheinrichtung 50, gelagert sein, mittels derer der Fahrzeugsitz 10 um eine vertikale Drehachse verschwenkbar ist. Optional kann auf der Rückseite der oberen Teilrückenlehne 12A eine Tischfläche ausgebildet und/oder eine Abdeckung zur Ausbildung einer Tischfläche angeordnet sein (nicht gezeigt). Die Erfindung ist nicht auf die vorstehend beschriebenen bevorzugten Ausführungsformen beschränkt. Vielmehr ist eine Vielzahl von Varianten und Abwandlungen möglich, die ebenfalls in den Schutzbereich, der durch die Ansprüche definiert ist, fallen.

### Bezugszeichenliste

- 10: Fahrzeugsitz
- 12: Rückenlehne
- 12A: Obere Teilrückenlehne
- 12B: Untere Teilrückenlehne
- 14: Sitzteil
- 14A: Vorderbereich des Sitzteils
- 14B: Endbereich des Sitzteils
- 14C: Unterseite des Sitzteils
- 16: Kopfstütze
- 18: Unterbau
- 18A: Hohlraum
- 20: Schienenanordnung
- 20A: Sitzschiene
- 20B: Bodenschiene
- 24: Oberes Beschlagsystem
- 26: Unteres Beschlagsystem
- 28: Schwenkverbindung
- 50: Dreheinrichtung
- L: Längsverstellrichtung
- S1: Erste Schwenkachse
- S2: Zweite Schwenkachse

## Patentansprüche

1. Fahrzeugsitz (10), vorzugsweise Kraftfahrzeugsitz, umfassend:
a) ein Sitzteil (14), das um eine horizontale erste Schwenkachse (S1) zwischen einer horizontalen Normalstellung und einer nicht-horizontalen, vorzugsweise vertikalen, Klappstellung verschwenkbar ist;
b) eine Rückenlehne (12), umfassend eine untere Teilrückenlehne (12B) und eine um eine horizontale zweite Schwenkachse (S2) schwenkbar an der unteren Teilrückenlehne (12B) angebrachte obere Teilrückenlehne (12A), wobei die obere Teilrückenlehne (12A) um die zweite Schwenkachse (S2) in Richtung des Sitzteils (14) in eine horizontale Klappstellung verschwenkbar ist; und
c) einen Unterbau (18), auf dem das Sitzteil (14) mittels einer Schwenkverbindung (28) um die horizontale erste Schwenkachse (S1) schwenkbar gehaltert ist und der einen zum Sitzteil (14) hin offenen Hohlraum (18A) ausbildet,
**dadurch gekennzeichnet, dass**
die Schwenkverbindung (28) beabstandet zu einem Endbereich (14B) des Sitzteils (14), der der unteren Teilrückenlehne (12B) in der horizontalen Normalstellung zugewandt ist, angeordnet ist, so dass beim Verschwenken des Sitzteils (14) von der horizontalen Normalstellung in dessen Klappstellung dieser Endbereich (14B) in den Hohlraum (18A) des Unterbaus (18) eintaucht.

2. Fahrzeugsitz (10) nach Anspruch 1, wobei die horizontalen ersten und zweiten Schwenkachsen (S1, S2) derart angeordnet sind,
a) dass die obere Teilrückenlehne (12A) in die horizontale Klappstellung verschwenkbar ist, wenn das Sitzteil (14) bereits in dessen Klappstellung verschwenkt ist; und/oder
b) dass das Sitzteil (14) in dessen Klappstellung verschwenkbar ist, wenn die obere Rückenlehne (12A) bereits in die horizontale Klappstellung verschwenkt ist.

3. Fahrzeugsitz (10) nach Anspruch 1 oder 2, wobei, wenn sich die obere Teilrückenlehne (12A) in der horizontalen Klappstellung und das Sitzteil (14) in dessen Klappstellung befinden, die obere Teilrückenlehne (12A) das Sitzteil (14) überragt und/oder auf dem Sitzteil aufliegt.

4. Fahrzeugsitz (10) nach einem der vorhergehenden Ansprüche, wobei eine Breite des Sitzteils (14) in dem Endbereich, der in der horizontalen Normalstellung zwischen der ersten Schwenkachse (S1) und der unteren Teilrückenlehne (12B) liegt, kleiner ist als eine Breite des Sitzteils (14) in einem Vorderbereich (14A).

5. Fahrzeugsitz (10) nach Anspruch 4, wobei die Breite des Vorderbereichs (14A) größer und die Breite des Endbereichs (14B) kleiner als eine Breite des Hohlraums (18A) des Unterbaus (18) ist.

6. Fahrzeugsitz (10) nach einem der vorhergehenden Ansprüche, ferner umfassend eine Arretiervorrichtung zur lösbaren Arretierung des Sitzteils (14) in der Klappstellung.

7. Fahrzeugsitz (10) nach den Ansprüchen 5 und 6, wobei die Arretiervorrichtung als Klemmvorrichtung ausgeführt ist, aufweisend eine im Unterbau (18) angeordnete Aufnahme oder Klemme zur Aufnahme eines oder einer an der Unterseite des Sitzteils angeordneten Klemmteils oder Aufnahme.

8. Fahrzeugsitz nach einem der Ansprüche 6 oder 7, wobei zur Ausbildung der Arrertiervorrichtung im Unterbau (18) eine Klemme und/oder Aufnahme so positioniert ist, dass beim Verschwenken des Sitzteils (14) von der horizontalen Normalstellung in dessen Klappstellung der in den Hohlraum (18A) eintauchende Endbereich (14B) des Sitzteils (14) an der Klemme und/oder Aufnahme arretiert wird, vorzugsweise in dem ein Rohrabschnitt eines Traggestells des Sitzteils (14) an der Klemme und/oder Aufnahme arretiert wird.

9. Fahrzeugsitz (10) nach einem der vorhergehenden Ansprüche, wobei die obere Teilrückenlehne (12A) auf ihrer Rückseite eine Tischfläche ausbildet und/oder wobei auf einer Rückseite der oberen Teilrückenlehne (12A) eine Abdeckung zur Ausbildung einer Tischfläche angeordnet ist.

10. Fahrzeugsitz (10) nach einem der vorhergehenden Ansprüche, wobei die obere Teilrückenlehne (12A) eine Kopfstütze (16) umfasst oder an einem oberen Ende der oberen Teilrückenlehne (12A) die Kopfstütze (16) angebracht oder anbringbar ist.

11. Fahrzeugsitz (10) nach einem der vorhergehenden Ansprüche, wobei der Fahrzeugsitz (10) unterseitig
a) entlang einer Schienenanordnung (20) horizontal verschiebbar angeordnet oder anordbar ist; und/oder
b) auf einer Dreheinrichtung (50), vorzugsweise einer drehtellerartigen Dreheinrichtung, gelagert ist, mittels derer der Fahrzeugsitz (10) um eine vertikale Drehachse verschwenkbar ist.

12. Fahrzeugsitz (10) nach einem der vorhergehenden Ansprüche, wobei die untere Teilrückenlehne (12B) neigungsverstellbar an dem Unterbau (18) gehaltert ist, vorzugsweise mittels eines Rückenlehnenbeschlagssystems (26) am Unterbau (18) gehaltert ist.

13. Fahrzeugsitz (10) nach einem der vorhergehenden Ansprüche, wobei
a) das Sitzteil (14) einen Sitzpolsterträger und ein auf dem Sitzpolsterträger angeordnetes Sitzpolster umfasst; und/oder
b) die obere Teilrückenlehne (12A) einen oberen Rückenpolsterträger und ein auf dem oberen Rückenpolsterträger angeordnetes oberes Rückenpolster umfasst; und/oder
c) die untere Teilrückenlehne (12B) einen unteren Rückenpolsterträger und ein auf dem unteren Rückenpolsterträger angeordnetes unteres Rückenpolster umfasst.

14. Fahrzeugsitz (10) nach einem der vorhergehenden Ansprüche, wobei der Fahrzeugsitz (10) ein Beifahrersitz für ein Fahrerhaus eines Nutzfahrzeugs ist.

15. Fahrzeug, vorzugsweise Nutzfahrzeug, mit einem Fahrzeugsitz (10) gemäß einem der vorhergehenden Ansprüche.

## Claims

1. Vehicle seat (10), preferably motor vehicle seat, comprising:
a) a seat part (14) which can be swivelled about a horizontal first swivel axis (S1) between a horizontal normal position and a non-horizontal, preferably vertical, folding position;
b) a backrest (12), comprising a lower partial backrest (12B) and an upper partial backrest (12A) mounted on the lower partial backrest (12B) so as to be pivotable about a horizontal second pivot axis (S2), the upper partial backrest (12A) being pivotable about the second pivot axis (S2) in the direction of the seat part (14) into a horizontal folding position; and
c) a substructure (18) on which the seat part (14) is mounted so as to be pivotable about the horizontal first pivot axis (S1) by means of a pivot connection (28) and which forms a cavity (18A) open towards the seat part (14),
**characterised in that**
the swivel connection (28) is arranged at a distance from an end region (14B) of the seat part (14), which faces the lower partial backrest (12B) in the horizontal normal position, so that when the seat part (14) is swivelled from the horizontal normal position into its folding position, this end region (14B) dips into the cavity (18A) of the substructure (18).

2. Vehicle seat (10) according to claim 1, wherein the horizontal first and second swivelling axes (S1, S2) are arranged in such a way,
a) that the upper partial backrest (12A) can be swivelled into the horizontal folding position when the seat part (14) is already swivelled into its folding position; and/or
b) that the seat part (14) can be swivelled into its folding position when the upper backrest (12A) is already swivelled into the horizontal folding position.

3. Vehicle seat (10) according to claim 1 or 2, wherein, when the upper partial backrest (12A) is in the horizontal folding position and the seat part (14) is in its folding position, the upper partial backrest (12A) projects beyond the seat part (14) and/or rests on the seat part.

4. Vehicle seat (10) according to one of the preceding claims, wherein a width of the seat part (14) in the end region, which in the horizontal normal position lies between the first pivot axis (S1) and the lower partial backrest (12B), is smaller than a width of the seat part (14) in a front region (14A).

5. The vehicle seat (10) according to claim 4, wherein the width of the front portion (14A) is larger and the width of the end portion (14B) is smaller than a width of the cavity (18A) of the substructure (18).

6. Vehicle seat (10) according to one of the preceding claims, further comprising a locking device for releasably locking the seat part (14) in the folding position.

7. Vehicle seat (10) according to claims 5 and 6, wherein the locking device is designed as a clamping device, comprising a receptacle or clamp arranged in the substructure (18) for receiving a clamping part or receptacle arranged on the underside of the seat part.

8. Vehicle seat according to one of claims 6 or 7, wherein a clamp and/or receptacle is positioned in the substructure (18) to form the locking device in such a way that when the seat part (14) is swivelled from the horizontal normal position into its folding position, the end region (14B) of the seat part (14) which dips into the cavity (18A) is arrested on the clamp and/or receptacle, preferably in which a tube section of a supporting frame of the seat part (14) is arrested on the clamp and/or receptacle.

9. Vehicle seat (10) according to one of the preceding claims, wherein the upper partial backrest (12A) forms a table surface on its rear side and/or wherein a cover for forming a table surface is arranged on a rear side of the upper partial backrest (12A).

10. Vehicle seat (10) according to one of the preceding claims, wherein the upper partial backrest (12A) comprises a headrest (16) or the headrest (16) is attached or attachable to an upper end of the upper partial backrest (12A).

11. Vehicle seat (10) according to one of the preceding claims, wherein the vehicle seat (10) is arranged or can be arranged at a lower side:
a) horizontally displaceable along a rail arrangement (20); and/or
b) mounted on a rotating device (50), preferably a turntable-like rotating device, by means of which the vehicle seat (10) can be pivoted about a vertical axis.

12. Vehicle seat (10) according to one of the preceding claims, wherein the lower partial backrest (12B) is mounted on the substructure (18) in an inclination-adjustable manner, preferably mounted on the substructure (18) by means of a backrest fitting system (26).

13. Vehicle seat (10) according to one of the preceding claims, wherein
a) the seat part (14) comprises a seat cushion support and a seat cushion arranged on the seat cushion support; and/or
b) the upper partial backrest (12A) comprises an upper back cushion support and an upper back cushion arranged on the upper back cushion support; and/or
c) the lower partial backrest (12B) comprises a lower back cushion support and a lower back cushion arranged on the lower back cushion support.

14. Vehicle seat (10) according to one of the preceding claims, wherein the vehicle seat (10) is a passenger seat for a cab of a commercial vehicle.

15. Vehicle, preferably commercial vehicle, with a vehicle seat (10) according to one of the preceding claims.

## Revendications

1. Siège de véhicule (10), de préférence siège de véhicule automobile, comprenant :
a) une partie d'assise (14), qui peut pivoter autour d'un premier axe de pivotement horizontal (S1) entre une position normale horizontale et une position rabattue non horizontale, de préférence verticale ;
b) un dossier (12), comprenant un dossier partiel inférieur (12B) et un dossier partiel supérieur (12A) fixé sur le dossier partiel inférieur (12B) de manière à pouvoir pivoter autour d'un deuxième axe de pivotement horizontal (S2), le dossier partiel supérieur (12A) pouvant pivoter autour du deuxième axe de pivotement (S2) en direction de la partie d'assise (14) dans une position rabattue horizontale ; et
c) une sous-structure (18), sur laquelle la partie d'assise (14) est maintenue de manière à pouvoir pivoter autour du premier axe de pivotement horizontal (S1) au moyen d'une liaison pivotante (28) et qui réalise une cavité (18A) ouverte vers la partie d'assise (14),
**caractérisé en ce que**
la liaison pivotante (28) est agencée à distance d'une zone d'extrémité (14B) de la partie d'assise (14), qui est tournée vers le dossier partiel inférieur (12B) dans la position normale horizontale, de telle sorte que, lors du pivotement de la partie d'assise (14) de la position normale horizontale à sa position rabattue, cette zone d'extrémité (14B) plonge dans la cavité (18A) de la sous-structure (18) .

2. Siège de véhicule (10) selon la revendication 1, dans lequel les premier et deuxième axes de pivotement horizontaux (S1, S2) sont agencés de telle sorte que
a) le dossier partiel supérieur (12A) peut être pivoté dans la position rabattue horizontale lorsque la partie d'assise (14) est déjà pivotée dans sa position rabattue ; et/ou
b) la partie d'assise (14) peut être pivotée dans sa position rabattue lorsque le dossier supérieur (12A) est déjà pivoté dans la position rabattue horizontale.

3. Siège de véhicule (10) selon la revendication 1 ou 2, dans lequel, lorsque le dossier partiel supérieur (12A) se trouve dans la position rabattue horizontale et la partie d'assise (14) dans sa position rabattue, le dossier partiel supérieur (12A) dépasse la partie d'assise (14) et/ou repose sur la partie d'assise.

4. Siège de véhicule (10) selon l'une quelconque des revendications précédentes, dans lequel une largeur de la partie d'assise (14) dans la zone d'extrémité qui, dans la position normale horizontale, est située entre le premier axe de pivotement (S1) et le dossier partiel inférieur (12B), est inférieure à une largeur de la partie d'assise (14) dans une zone avant (14A).

5. Siège de véhicule (10) selon la revendication 4, dans lequel la largeur de la zone avant (14A) est supérieure et la largeur de la zone d'extrémité (14B) est inférieure à une largeur de la cavité (18A) de la sous-structure (18) .

6. Siège de véhicule (10) selon l'une quelconque des revendications précédentes, comprenant en outre un dispositif de blocage pour bloquer de manière libérable la partie d'assise (14) dans la position rabattue.

7. Siège de véhicule (10) selon les revendications 5 et 6, dans lequel le dispositif de blocage est conçu sous forme de dispositif de serrage, présentant un logement ou une pince agencé(e) dans la sous-structure (18) pour recevoir une pièce de serrage ou un logement agencé(e) sur le côté inférieur de la partie d'assise.

8. Siège de véhicule selon l'une quelconque des revendications 6 ou 7, dans lequel, pour réaliser le dispositif de blocage, une pince et/ou un logement est positionné(e) dans la sous-structure (18) de telle sorte que, lors du pivotement de la partie d'assise (14) de la position normale horizontale à sa position rabattue, la zone d'extrémité (14B) de la partie d'assise (14) plongeant dans la cavité (18A) est bloquée sur la pince et/ou le logement, de préférence par le fait qu'une section tubulaire d'un cadre porteur de la partie d'assise (14) est bloquée sur la pince et/ou le logement.

9. Siège de véhicule (10) selon l'une quelconque des revendications précédentes, dans lequel le dossier partiel supérieur (12A) réalise une surface de table sur son côté arrière et/ou dans lequel un couvercle est agencé sur un côté arrière du dossier partiel supérieur (12A) pour réaliser une surface de table.

10. Siège de véhicule (10) selon l'une quelconque des revendications précédentes, dans lequel le dossier partiel supérieur (12A) comprend un appuie-tête (16) ou l'appuie-tête (16) est fixé ou peut être fixé à une extrémité supérieure du dossier partiel supérieur (12A).

11. Siège de véhicule (10) selon l'une quelconque des revendications précédentes, dans lequel le siège de véhicule (10), sur le côté inférieur,
a) est agencé ou peut être agencé de manière à pouvoir être déplacé horizontalement le long d'un agencement de rails (20) ; et/ou
b) est monté sur un dispositif rotatif (50), de préférence un dispositif rotatif de type plateau tournant, au moyen duquel le siège de véhicule (10) peut pivoter autour d'un axe de rotation vertical.

12. Siège de véhicule (10) selon l'une quelconque des revendications précédentes, dans lequel le dossier partiel inférieur (12B) est maintenu sur la sous-structure (18) de manière à pouvoir être incliné, de préférence est maintenu sur la sous-structure (18) au moyen d'un système de ferrure de dossier (26).

13. Siège de véhicule (10) selon l'une quelconque des revendications précédentes, dans lequel
a) la partie d'assise (14) comprend un support de coussin d'assise et un coussin d'assise agencé sur le support de coussin d'assise ; et/ou
b) le dossier partiel supérieur (12A) comprend un support de coussin de dossier supérieur et un coussin de dossier supérieur agencé sur le support de coussin de dossier supérieur ; et/ou
c) le dossier partiel inférieur (12B) comprend un support de coussin de dossier inférieur et un coussin de dossier inférieur agencé sur le support de coussin de dossier inférieur.

14. Siège de véhicule (10) selon l'une quelconque des revendications précédentes, le siège de véhicule (10) étant un siège de passager pour une cabine de conducteur d'un véhicule utilitaire.

15. Véhicule, de préférence véhicule utilitaire, avec un siège de véhicule (10) selon l'une quelconque des revendications précédentes.
